# EUROPEAN PATENT SPECIFICATION

(11) **EP 1 470 514 B1**
(45) Date of publication and mention of the grant of the patent: **08.06.2005**
(21) Application number: 03734840.6
(22) Date of filing: 24.01.2003
(51) Int. Cl.: G06F 17/60, G06K 19/00, G06K 7/00

(54) **AN ADMINISTRATION SYSTEM FOR SHIPMENT OF PARTS**
ADMINISTRATIONSSYSTEM FÜR DIE AUSLIEFERUNG VON TEILEN
SYSTEME DE GESTION POUR L'EXPEDITION D'ARTICLES

(30) Priority: 30.01.2002 JP 2002020834
(43) Date of publication of application: 27.10.2004
(73) Proprietor: Honda Giken Kogyo Kabushiki Kaisha, Minato-ku, Tokyo 107-8556 (JP)
(72) Inventor: KAWAKAMI, Ikuo, Honda Giken Kogyo K. K., Tokyo 107-8556 (JP); WATANABE, Noboru, Honda Giken Kogyo K.K., Tokyo 107-8556 (JP)
(74) Representative: Rupp, Christian, Dipl.-Phys.
(86) International application number: PCT/JP2003/000679
(87) International publication number: WO 2003/065265

(56) References cited:
- WO-A-01/35348
- US-A- 5 038 283
- US-A- 6 026 378
- US-A- 6 148 291
- US-A1- 2001 030 232

## Description

### TECHNICAL FIELD

The present invention relates to an administration system for administrating shipping operations of retrieving parts from a warehouse for packing and shipping of those parts.

### BACKGROUND ART

The Japanese Patent Application Unexamined Publication No. H5-94459 discloses a technique for assigning respective barcodes to each of the products and to a stockyard of the products and collecting the information by the use of a barcode reader in order to perform a centralized administration upon information on the product inventory. Besides, the Japanese Patent Application Unexamined Publication No. H6-143871 discloses a technique for attaching a card containing a barcode to each of parts for vessels so as to perform an inventory control. A system according to the preamble of claim 1 is disclosed in US 6 026 378.

Usually, when a plurality of parts are sent to one shipping destination, those parts are first packed in a plurality of cartons based on types of the parts and then after confirmation of the contents of the cartons, the respective carton numbers are determined in accordance with a numbering rule. Thereafter, labels containing these carton numbers are printed and attached to the cartons. Plural cartons prepared in this manner are further packed in a crate, which is a sturdier box. In accordance with another numbering rule, each crate is given a number which is applicable uniquely to each crate.

According to such conventional shipping operation, a carton number of a carton must be issued by the administration system every time the parts are packed into that carton. As a result, there may occur a waiting time until the numbers for the cartons and the crate are assigned. Or workers may have to go back and forth between the packing place and the office.

Thus, an objective of the present invention is to provide an administration system for improving the efficiency of the shipping work.

### DISCLOSURE OF INVENTION

The present invention provides an administration system for shipment of parts. The system comprises a computer for searching a parts-order database based on shipping destinations to prepare respective shipping instructions for each of the shipping destinations in order to ship the parts. The system further comprises a hand-held terminal device comprising a display screen for displaying the shipping instructions and a barcode reader connected to the hand-held terminal device. The system further comprises a printer for printing, based on one of the shipping instructions, a barcode representing a serial number or another unique number on each of labels to be attached to a plurality of cartons which are used for packing the parts and a crate for containing those cartons.

The hand-held terminal device comprises a memory in which the numbers for the cartons are stored in association with the parts in response to reading the labels attached to the cartons by the use of the barcode reader when the parts displayed in the screen of the hand-held terminal device are packed into the cartons.

According to this invention, since each of the cartons to be used for packing the parts is assigned an arbitrary number from the unique numbers such as serial numbers, workers can work for packing operations without considering the numbers for the cartons. According to one aspect of this invention, after the parts retrieved from the parts shelves are packed according to the shipping instruction displayed on the hand-held-terminal, each carton is related with the parts by reading the barcodes of the cartons with the barcode reader. Thus, the administration system can recognize which parts are contained in each of the cartons through the information provided by the barcode reader.

According to another aspect of the invention, the hand-held terminal device is configured to store in the memory the number for the crate in association with the plural cartons in response to reading the label attached to the crate with the barcode reader.

The hand-held terminal device may be constructed either in one piece with the barcode reader or constructed separately from the barcode reader. In a further aspect of the invention, the hand-held terminal device is a stand-alone device integrated with the barcode reader, which makes a communication with the computer via wire or infrared ray. Besides, in a yet another aspect of the invention, the hand-held terminal device is a wireless-communication portable terminal, which makes a wireless communication with the remote computer from the shipping workplace.

### BRIEF DESCRIPTION OF THE DRAWINGS

Figure 1 is a block diagram showing an overall structure of one embodiment of this invention.
Figure 2 is a flowchart of a process in accordance with one embodiment of this invention.

### BEST MODE FOR CARRYING OUT THE INVENTION

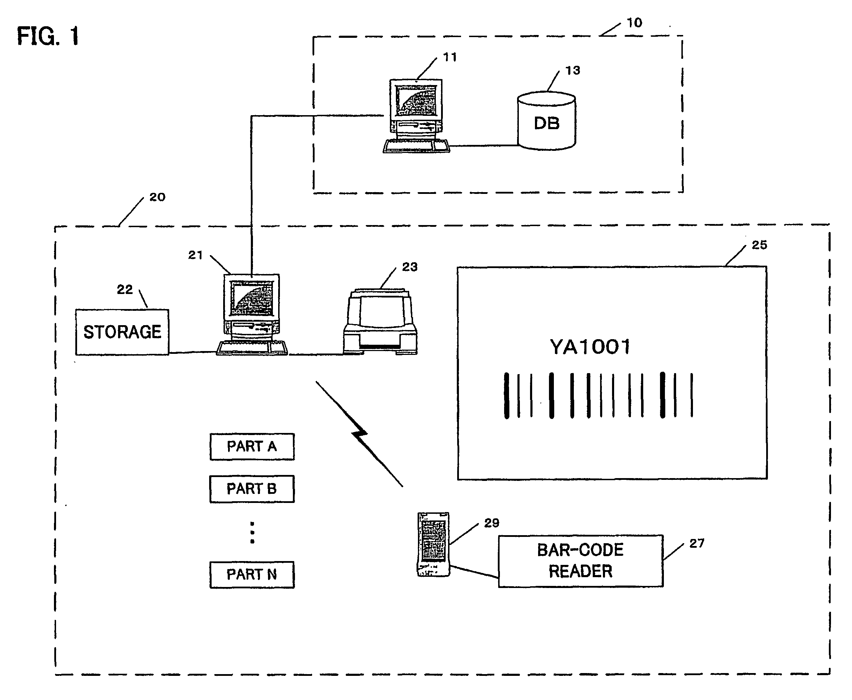

Following will describe specific embodiments of the present invention with reference to the accompanying drawings. Referring to Figure 1, a manufacturing company for producing such products as motor vehicles uses a data processing system 10 with which administration operations for issuing and receiving orders are performed with respect to a plurality of parts to be used for the repair and maintenance of the products of the company. The orders for the parts are issued from domestic dealers, repair shops, part shops and related oversea companies. The data regarding the orders are stored in a database 13 via a computer 11. The purchasing orders are issued to part makers based on the received orders of the parts stored in the database 13. The parts supplied by the part makers are delivered to a warehouse or a shipping workplace 20 of the manufacturing company and stored in part storage shelves therein.

In one embodiment of the present invention, the warehouse and the shipping workplace of the manufacturing company are located within the same site, so that the parts can be packed in the cartons immediately after the parts have been picked up from the storage shelves. Therefore, the warehouse or the shipping workplace will be hereinafter referred to as a warehouse 20 generically. The data processing system 10 may be disposed in an office of the warehouse 20 or in a computer room. Or, it may be located in a remote computer center.

A computer 21 and a printer 23 are located in the office of the warehouse 20 or at a workplace for the shipping operation. The computer 21 may be a personal computer, which operates to communicate with the data processing system 10 via in-house LAN and retrieve orders of the parts for each shipping destination to store those orders in a storage device 22. Although only one computer 21 is illustrated in Figure 1, more than one computers may be used through connection to the LAN depending on the workload.

As for the orders with respect to each of the shipping destinations, a staff member in charge of the shipping plan refers to the database 13 to obtain the stock data and the volume data (represented in a unit of cubic foot) for each of the parts so as to prepare shipping instructions. A shipping instruction includes, for example, the content shown in the following Table 1:

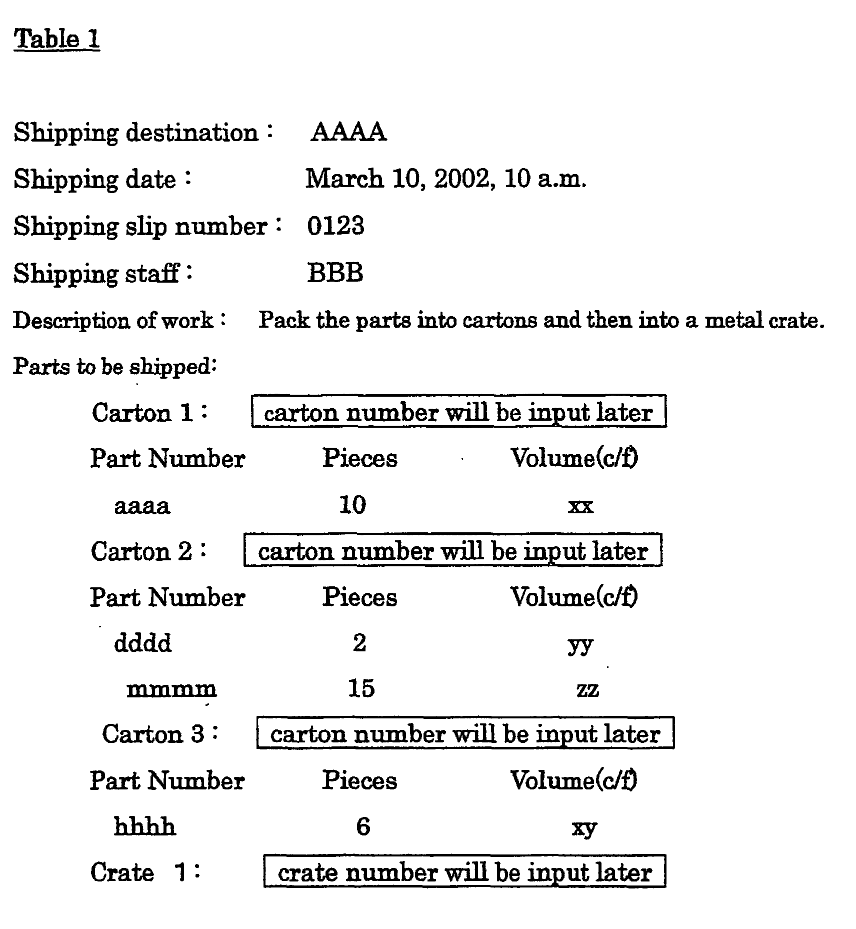

Although all of Carton 1, Carton 2 and Carton 3 have the same size in this example, cartons having different sizes may be used depending on the volume sizes of the parts to be shipped. A crate that can accommodate Cartons 1 through 3 is specified as Crate 1. Within the rectangular frames in Table 1, the respective identification numbers for each carton and the crate will be written after they have been read from the carton or the crate by the barcode reader in a later stage.

It is found out from Table 1 that the shipping operation for the slip number 0123 needs three cartons and one crate. On the day for the shipment or before that date, a worker in charge of the shipment confirms the shipping work through the display screen of the computer 21 and uses the printer 23 to print a necessary number of sheets of the barcode labels 25, for example, 4 sheets of the labels in this exemplary case. At the printing time, the computer 21 assigns serial numbers to those 4 sheets of labels; in other words, the computer 21 assigns barcode representations for the serial numbers together with their alphanumeric characters to those labels. Although serial numbers are assigned to labels in this embodiment, any type of number may be used for implementing the present invention as long as the number is unique to each of the labels.

When a stand-alone data-recording device is used as hand-held terminal 29, the worker BBB in charge of the shipment connects the hand-held terminal 29 to the computer 21 to download an electronic file containing such shipping instruction as illustrated in Table 1 from the computer 21 to the memory of the hand-held terminal 29.

The worker BBB takes the previously-printed four sheets of labels and the hand-held terminal to the shipping workplace and attaches three sheets of those labels to three cartons and the remaining one sheet to the crate. Any label can be arbitrarily attached to any carton or the crate.

The worker BBB activates the hand-held terminal 29 to display the shipping instruction of Table 1 in the screen. According to the shipping instruction, the worker BBB takes out the parts having the part number aaaa from the part shelf and packs them into one carton. While the worker BBB positions the cursor within the blank rectangle located adjacently to Carton 1 on the screen of the hand-held terminal 29, the worker BBB uses the barcode reader 27 built in the hand-held terminal to read the barcode of the label of this carton. The hand-held terminal 29 decodes the obtained barcode and stores the number in the memory in association with the shipping instruction. Specifically, in case of the label 25 of Figure 1, the label number YA1001 is stored at the position of Carton 1 in the shipping instruction.

According to the same procedure, the specified parts are packed in Carton 2 and Carton 3. It is assumed that the number that is read from the label of Carton 2 is YA1003 and the number that is read from the label of the carton 3 is YA1004. Then, the worker BBB packs those three cartons in Crate 1 having its own label and reads the label of Crate 1 by use of the barcode reader 27. Given that the number which is read from of the crate label is A1002, the shipping instruction, which is stored in the hand-held terminal 29 and displayed in the screen, is as shown in the following Table 2:

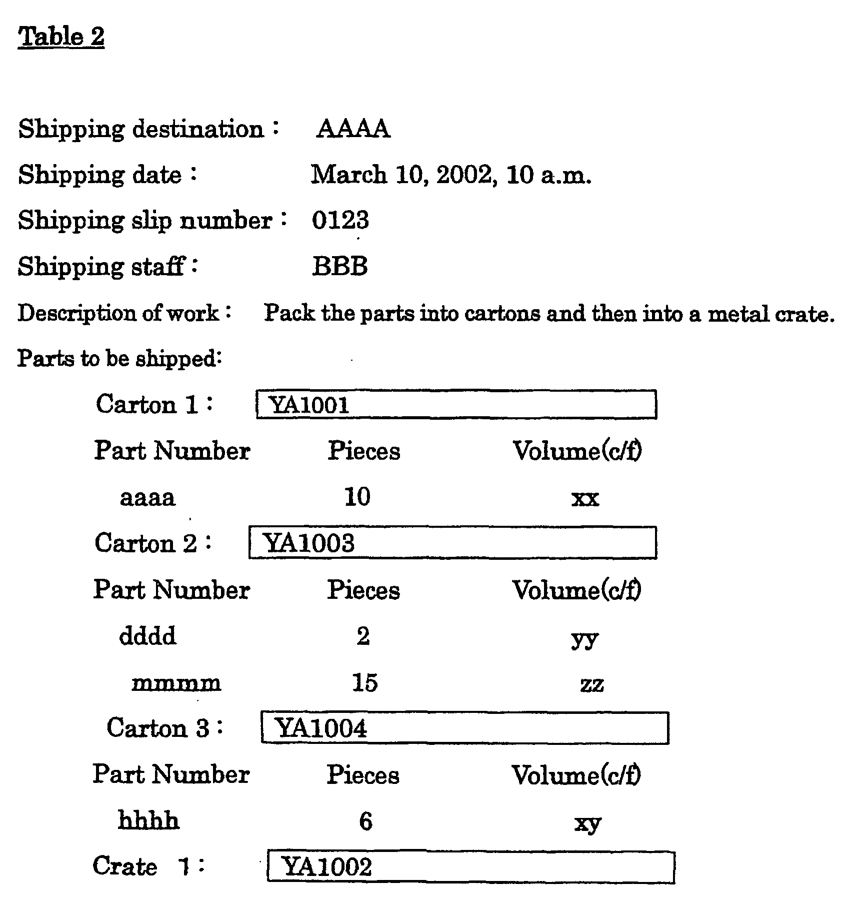

It is found out from Table 2 that, as a result of the shipping work, three cartons YA1001, YA1003 and YA1004 are contained in the crate YA1002 as well as which parts and how many parts are packed in each of the cartons.

After the shipping work, the crate is delivered to the shipping yard so as to be shipped toward the destination by means of truck, aircraft, ship or the like. When the shipping operation is completed, the worker BBB connects the hand-held terminal 29 to the computer 21 to upload the data stored in the hand-held terminal 29 to the computer 21. When the hand-held terminal 29 is a wireless portable terminal device, the worker BBB can upload the data to the computer 21 by transmitting form the site where the worker has worked for the shipment.

The data uploaded to the computer 21 are edited into a form of a shipping slip and sent to the data processing system 10. The data processing system 10 is configured to communicate, through a network, with parts-ordering entities such as dealers, repair shops and related oversea companies who are dealing with the parts. As for the network, such network VPN (Virtual Private Network) is preferably used because security is assured with such network. A parts-ordering entity can get the shipping information by means of communicating with the data processing system 10 through this network.

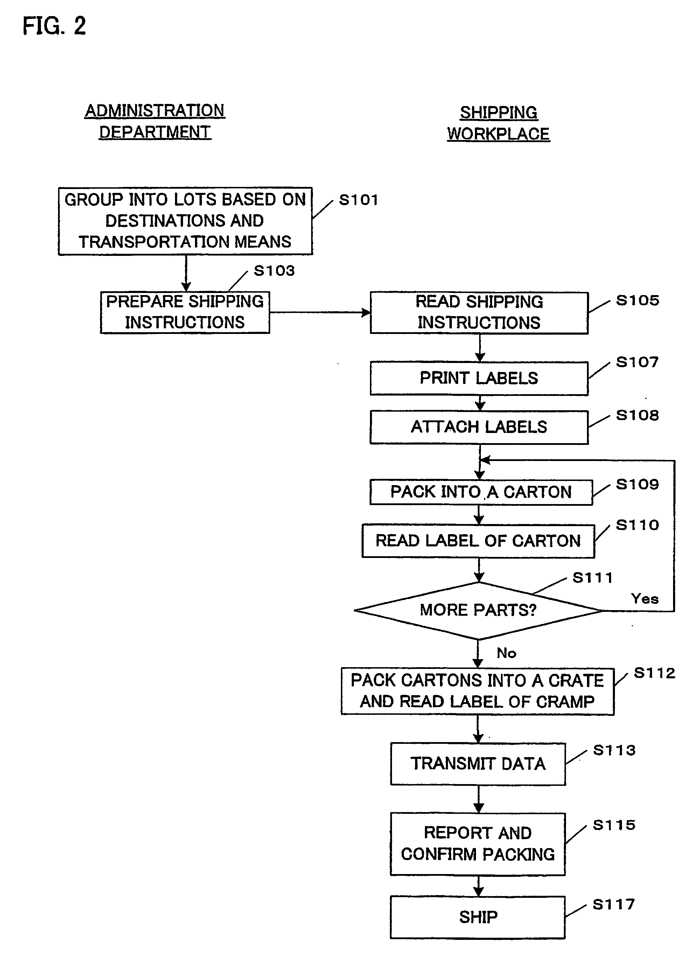

Figure 2 is a flowchart of a process in accordance with one embodiment of the present invention. An administration department in charge of the part shipment uses the computer 21 connected to the database of the data processing system 10 to group the parts to be shipped into appropriate lots based on the destinations for delivering the parts and the delivery means (S101) so as to prepare the shipping instructions (S103).

The worker in charge of the shipping operation uses the computer 21 or a computer connected to the computer 21 through LAN to read out a shipping instruction (S105) and print a necessary number of the labels for that shipping work (S107). The worker attaches the labels to the necessary number of cartons and a crate (S108) and then packs the parts into the cartons (S109). When packing, the worker reads the barcode of the label of each carton into the hand-held terminal 29 (S110).

Until all of the parts for one lot are packed into the cartons, steps S109 and S110 are repeated (S111). After packing the parts into the cartons, the cartons are further contained in a crate and the label of the crate is read into the hand-held terminal 29 (S112). The data which are thus stored in the hand-held terminal are uploaded to the computer 21 (S113). Such uploaded data are confirmed on the screen of the computer 21 (S115) so that the shipment is carried out (S117).

As above described, the labels of the cartons in which the parts are packed are read by the barcode reader and then the parts are automatically associated with the identification numbers for the cartons. Thus, persons in charge of the shipping operations can work for the shipping without considering the identification numbers of the cartons, so that it becomes possible to decrease mistakes of the work and improve efficiency of the work.

Although the present invention has been above described with respect to specific embodiments, the present invention is not limited to those embodiments.

## Claims

1. A system for administrating shipments of parts, comprising:
a computer (21) for searching through a parts-order database (13) based on shipping destinations to prepare respective shipping instructions for each of the shipping destinations in order to ship the parts;
a hand-held terminal device (29) having a display screen for displaying the shipping instructions indicating parts to be shipped;
a barcode reader (27) connected to the hand-held terminal device (29); **characterised by**
a printer (23) for printing a barcode (25) representing a serial number or another unique code onto each of the labels to be attached to each of a plurality of cartons,
wherein the hand-held terminal device (29) comprises a memory in which said serial number or another unique code for each carton is stored in association with the parts displayed on the screen of the hand-held terminal device (29) in response to the reading of the label attached to the carton with the barcode reader (27) when the parts displayed on the screen of the hand-held terminal device (29) are packed into the carton.

2. The system according to claim 1, wherein the hand-held terminal device (29) is further configured to store in the memory a serial number or another unique code of a crate in association with plural cartons that are contained in the crate responsive to reading with the barcode reader (27) of a label attached to the crate.

3. The system according to claim 2, wherein the hand-held terminal device (29) is constructed in one piece with the barcode reader (27).

4. The system according to claim 2, wherein the hand-held terminal device (29) is a wireless-communication portable terminal that makes a wireless communication with the computer (21).

## Patentansprüche

1. Administrationssystem für die Auslieferung von Teilen, umfassend:
- einen Computer zum Durchsuchen einer Teileanforderungs-Datenbank, basierend auf Versand-Zieladressen, zur Bereitstellung der entsprechenden Versand-Anweisungen für jede der Versand-Zieladressen, um die Teile zu versenden,
- ein tragbares Endgerät mit einem Anzeige-Bildschirm zum Anzeigen der Versand-Anweisungen, wobei die Versand-Anweisungen die zu versendenden Teile angeben;
- ein Strichcode-Lesegerät, das mit dem tragbaren Endgerät verbunden ist,
- einen Drucker zum Drucken eines Strichcodes auf jeden der Aufkleber, die auf einen jeden von mehreren Kartons angebracht werden sollen, wobei der Strichcode eine Fabrikationsnummer oder einen anderen eindeutigen Code darstellt,
wobei das tragbare Endgerät einen Speicher umfasst, in dem die Fabrikationsnummer oder der andere eindeutige Code für jeden Karton in Verbindung mit den Teilen gespeichert ist, die auf den Bildschirm des tragbaren Endgeräts (29) als Antwort auf das Lesen des Strichcodes, der auf dem Karton angebracht ist, mit dem Strichcode-Lesegerät, angezeigt werden, wenn die auf dem Bildschirm des tragbaren Endgeräts angezeigten Teile in den Karton gepackt werden.

2. System nach Anspruch 1,
wobei das tragbare Endgerät weiterhin dazu ausgelegt ist, im Speicher eine Fabrikationsnummer oder einen anderen eindeutigen Code einer Steige in Verbindung mit mehreren Kartons, die in der Steige aufgenommen sind, als Antwort auf ein Lesen eines Strichcodes, der auf der Steige angebracht ist, mit dem Strichcode-Lesegerät.

3. System nach Anspruch 2,
wobei das tragbare Endgerät einstückig mit dem Strichcode-Lesegerät (27) ausgebildet ist.

4. System nach Anspruch 2,
wobei das tragbare Endgerät ein transportables Endgerät für drahtlose Datenkommunikation ist, das drahtlos mit dem Computer (21) kommuniziert.

## Revendications

1. Système pour la gestion d'expéditions d'articles, comprenant :
un ordinateur (21) pour rechercher dans une base de donnée pour la commande d'articles (13) basée sur les destinations d'expédition afin de préparer les instructions d'expédition respectives pour chacune des destinations d'expédition afin d'expédier les articles;
un appareil terminal portable (29) ayant un écran d'affichage pour afficher les instructions d'expédition indiquant les articles à expédier;
un lecteur de code à barres (27) connecté à l'appareil terminal portable (29) **caractérisé par**
une imprimante (23) pour imprimer un code à barres (25) représentant un numéro de série ou un autre code unique sur chacune des étiquettes à attacher à chacun de plusieurs cartons,
dans lequel l'appareil terminal portable (29) comprend une mémoire dans laquelle ledit numéro de série ou autre code unique pour chaque carton est mémorisé en association avec les articles affichés sur l'écran de l'appareil terminal portable (29) en réponse à la lecture de l'étiquette attachée au carton avec le lecteur de code à barres (27) quand les articles affichés sur l'écran de l'appareil terminal portable (29) sont emballés dans le carton.

2. Le système selon la revendication 1, dans lequel l'appareil terminal portable (29) est de plus configuré pour garder en mémoire un numéro de série ou autre code unique d'une caisse en association avec plusieurs cartons qui sont contenus dans la caisse répondant à la lecture avec le lecteur de code à barres (27) d'une étiquette attachée à la caisse.

3. Le système selon la revendication 2, dans lequel l'appareil terminal portable (29) est construit en une pièce avec le lecteur de code à barres (27).

4. Le système selon la revendication 2, dans lequel l'appareil terminal portable (29) est un terminal portable pour communication sans fil qui établit une communication sans fil avec l'ordinateur (21).
